# EUROPEAN PATENT SPECIFICATION

(11) **EP 4 507 818 B1**
(45) Date of publication and mention of the grant of the patent: **28.01.2026**
(21) Application number: 23718234.0
(22) Date of filing: 06.04.2023
(51) Int. Cl.: B01J 8/00, B01J 8/02

(54) **IMPROVED HORIZONTAL RADIAL FLOW REACTOR**
VERBESSERTER HORIZONTALER RADIALFLUSSREAKTOR
RÉACTEUR À FLUX RADIAL HORIZONTAL AMÉLIORÉ

(30) Priority: 13.04.2022 EP 22168231
(43) Date of publication of application: 19.02.2025
(73) Proprietor: CASALE SA, 6900 Lugano (CH)
(72) Inventor: PANZA, Sergio, 22100 Como (IT); REDAELLI, Luca, 22020 Drezzo (CO) (IT)
(74) Representative: M. Zardi & Co S.A.
(86) International application number: PCT/EP2023/059134
(87) International publication number: WO 2023/198588

(56) References cited:
- EP-A1- 3 157 662
- US-A- 4 099 926
- US-A1- 2011 250 102
- US-B1- 6 224 838
- US-B2- 8 398 930

## Description

### Field of application

The invention is in the field of chemical reactors. In particular, the invention relates to a horizontal reactor with an annular catalytic bed traversed by a radial flow.

### Prior art

A wide range of processes uses radial flow reactors to provide a contact between one or more reagents and a catalyst. A known kind of reactor includes one or more catalytic beds with an annular cylindrical shape, traversed by a radial flow of gaseous reagents or products. These reactors for example are used for the synthesis of ammonia, synthesis of methanol, water-gas shift conversion and other applications. The catalytic bed is normally contained in a basket and the basket may be part of a removal cartridge.

A radial flow reactor requires suitable means to distribute the input gas and collect the effluent gas into and from the catalytic bed. Said means may include perforated cylindrical walls or so-called scallops.

The term scallops is commonly used in the field to denote perforated ducts with a front side facing the catalyst and a back side, wherein the front side typically has a curved profile, so that the scallop has for example a D-shaped profile. The scallops typically have the functions of retaining the catalyst and supplying the gaseous mixture of reagents into the catalytic bed, or collecting the effluent thereof. The scallops may be separate items or may be obtained by fixing a perforated sheet to a cylindrical wall, e.g. of a cartridge. A reactor provided with scallops is for instance disclosed in US 5,209,908.

The hollow space at the center of the annular bed may contain a collector duct or a heat exchanger. For example, in a multi-bed reactor said heat exchanger may remove heat from the effluent gas before said gas is fed to a next catalytic bed.

The reactors as above described may be vertical or horizontal. The catalyst is typically in a granular or pellet form.

A problem encountered in the reactors is associated with the settlement and shrinkage of the granules of catalyst after loading and during use, which reduces the overall volume of the catalytic bed.

In a vertical reactor, the settlement and shrinkage of the catalyst have a moderate impact on the operation of the bed because the level of the catalyst decreases but the overall shape of the bed is substantially unaltered. Contrarily, in a horizontal reactor based on radial configuration the issue is more serious because the settlement and shrinkage tend to form a disk-segment empty region in the upper portion of the catalytic bed, so that the shape of the bed is affected and the flow regime deviates from the desired axial symmetry.

Said empty region formed in the upper portion of the catalytic bed may cause, for example, uneven distribution of reactant gas through the catalytic bed and uneven utilization of the catalyst leading to poor catalytic performances.

Another issue of horizontal reactors concerns the loading and unloading operation of the catalyst in and out from the catalytic bed. Frequently said operation is not handy due to limited space available inside the catalytic reactor to carry out the operation.

EP 3 157 662 proposes a solution to facilitate the loading and unloading operation of the catalyst which is satisfying but requires removing the entire catalyst bed and its cartridge from the pressure vessel and rotating the cartridge in a vertical position during loading.

US 8 398 930 describes a system for holding a catalyst bed in a radial flow reactor. US 2001/250102 A1 belongs to the known art.

Accordingly, there is a need for an improved horizontal chemical reactor that allows the catalytic loading operation to be simpler and more reliable and that allows reaching an even distribution of the catalyst within the catalytic bed.

### Summary of the invention

The aim of the present invention is to solve the above drawbacks of the prior art, particularly: to eliminate or reduce the negative effect caused by the settlement and shrinkage of the catalyst and to facilitate loading and unloading of the catalyst.

The above aim is reached with a reactor according to the claims.

The invention concerns a horizontal reactor with a set of scallops arranged circumferentially around a horizontal annular reaction space to distribute or collect a gas stream. In the invention, a gap is or can be created in the set of scallops surrounding the reaction space. In an embodiment, the set of scallops is suitably interrupted to leave a permanent gap between two end scallops. In another embodiment, a temporary gap is formed by removing at least one removable scallop.

Said gap in the set of scallops, be it permanent or temporary, facilitates the access to the reaction space for loading and unloading the catalyst. Said gap is located above the catalytic bed on top of a cylindrical wall around the catalytic bed.

The invention provides simpler, faster and more reliable loading/unloading of the catalyst. Particularly, the invention does not require to move a cartridge of the catalytic bed in a vertical position to load or discharge the catalyst. The catalyst can be loaded whilst the cartridge remains in a horizontal position. Therefore, greater control of the load density of the catalyst within the catalytic bed can be obtained.

A permanent gap in the set of scallops may be connected to means for distributing or collecting the gas stream, so that said gap acts as a virtual scallop, although a scallop is not physically provided.

An aspect of the invention is the finding that a gap in the set of scallops, which may appear as a missing scallop, can provide a suitable access to the inside of the reaction space for maintenance or for loading/unloading the catalyst and, during normal operation, can work as a virtual scallop where the gaseous mixture is distributed or collected, so that the normal operation of the catalytic bed is not affected.

Another advantage of the invention is that the mechanical resistance of the reactor can be improved in embodiments where the outer collector is formed by the scallops and walls of the scallops are part of the basket, hence there is no collector formed as a separate entity and requiring dedicated supports such as containment rings.

It is also disclosed a method for loading a catalyst in a horizontal radial-flow reactor according to the present invention wherein:
the catalyst is poured in the reaction space while the reactor is horizontal;
the reaction space is filled with catalyst so that a free space on top of the array of scallops, which is either the above-mentioned permanent gap or the temporary gap due to removal of one or more removable scallop(s), is initially filled with catalyst;
wherein the catalyst, after shrinkage, reaches a level below said free space, so that said free space does not contain catalyst after the catalyst shrinkage, so that said free space can be used for the distribution or collection of gas into/from the reaction space.

Said free space, after the catalyst shrinkage, may act substantially as a virtual scallop for distribution or collection of gas. Particularly preferably, said free space is arranged to obtain that the gas in the reaction space has a substantially radial direction.

Still another aspect of the invention is a method for operating a horizontal radial-flow reactor according to the claims. According to this method, the reaction space of the reactor is filled with catalyst so that a free space on top of the array of scallops, which is either a gap in the array of scallops or an empty space after removal of one or more removable scallop(s), is initially filled with catalyst. However, the catalyst, after shrinkage, reaches a level below said free space, so that said free space does not contain catalyst after the catalyst shrinkage, and said free space left by the catalyst shrinkage, during operation, is used for the distribution or collection of gas into/from the reaction space and wherein said gas has a substantially radial direction.

### Detailed description of the invention

A horizontal radial-flow reactor according to the invention comprises a horizontal reaction vessel including an annular cylindrical reaction space configured to contain a catalyst for processing a gaseous flow.

The reactor is configured to operate in a horizontal position. The vessel of the reactor has a longitudinal axis which in operation is horizontal. A horizontal reactor may be discernible by the arrangement of supports and/or by the arrangement of its inputs and outputs.

The term basket denotes the part of the ammonia converter where the gas is collected and distributed inside a catalytic bed. The inner collector and the outer collector may be parts of the basket. The scallops may form an outer collector or an inner collector. In some embodiments the external wall of the basket may correspond with the cartridge wall, whereas in other embodiments the scallops' walls lean against the cartridge wall.

The reactor comprises a plurality of gas-permeable scallops which surround said reaction space and are arranged to distribute or collect said gaseous flow into or from said reaction space. Said gas-permeable scallops are distributed circumferentially around the reaction space, thus forming a circumferential array.

The scallops are preferably manufactured as elongated hollow structures so that the fresh reagent gas can flow in and out from ends of the scallops.

Each of said scallops has at least one gas-permeable surface facing the inside of the reaction space to introduce or collect the gaseous flow into or from the reaction space.

In a first embodiment, said scallops are distributed over an angle of less than 360 degrees, when seen in a cross section, so that the circumferential array of scallops has a gap, that is a boundary region the reaction space without scallops. Said gap is located above the reaction space and is delimited between two end scallops of the array.

Said gap has preferably the same size or substantially the same size as the scallops of the array. The two end scallops which delimit the gap may have a suitably modified shape. Preferably said two end scallops have a smaller cross section compared to the other scallops. In some embodiments said two end scallops have a truncated shape according to a plane of truncation.

Said scallops having a truncated shape may have a gas-permeable surface that faces the catalytic bed and a gas permeable surface that faces the gap created by the space without scallops.

In a second embodiment, scallops are distributed over a full angle of 360 degrees and the array of gas permeable scallops includes at least one removable scallop at the top of the array, so that a gap in the array of scallops can be formed by removing at least one removable scallop.

According to the present embodiment, also when adopting a removable scallop instead of providing a gap in the array of scallops, after the pouring of the catalyst into the catalytic bed, a virtual scallop is created above the reaction space that faces the removable scallop(s).

One or more removable scallop(s) may be provided in this second embodiment and one or more scallop(s) may be removed for the loading of catalyst.

The removable scallop may have a special shape which differ from the shape of other scallops.

Said gap in the array of scallops is located above the reaction space, preferably at the highest elevation of the boundary of the reaction space, to facilitate discharge and loading the catalyst.

The reactor comprises at least one port adapted to load or unload a catalyst into or from said reaction space. Said port is in communication with said gap in the array of scallops or with the space left after removal of a removable scallop, according to embodiments of the invention.

In embodiments with one or more removable scallop(s), the loading or unloading of the catalyst can be made through the aperture which is formed after the removal of one or more scallops. The removable scallop is positioned so that said aperture, which is formed after removal of said scallop, is in communication with the port for loading or unloading the catalyst.

In embodiments with a permanent gap delimited by two end scallops of the array, said end scallops may have a modified shape compared to the other gas-permeable scallops of the array. Hence the array may comprise a plurality of scallops of a conventional design and a pair of scallops of modified design which delimit the gap.

Preferably, each of the two modified end scallops includes at least one gas-permeable surface arranged to distribute or collect a gaseous flow into or from said region free of scallops. Accordingly, a reagent gas or product gas can be fed directly into or collected from the gap to ensure a proper radial flow in the reaction space.

In a preferred embodiment, said gas permeable scallops have a gas-permeable curved front surface facing the reaction space and have a truncated shape according to a plane of truncation, said plane of truncation being preferably a radial plane which contains the horizontal axis of the reactor or a vertical plane.

For example, the array of scallops may include regular scallops having a D-shape or disk-segment shape and the two end scallops may have the same shape but truncated according to a plane of truncation, which is preferably a radial plane or a vertical plane.

Preferably the gas-permeable surface of the modified end scallops, which is arranged to distribute or collect the gaseous mixture, belongs to said plane of truncation.

According to an embodiment of the invention the overall set of scallops, seen in a cross section, extends over an angle of 300 to 330 degrees. Accordingly, the gap may cover an angle of 30 to 60 degrees.

The scallops may be part of a gas distributor or gas collector arranged around the reaction space of the reactor. The gas distributor or gas collector can be used to supply the reagent gas first into the scallops and then radially into the catalytic bed.

According to an embodiment, the reactor comprises a plurality of ports distanced between each other and distributed over the length of the reaction space for loading or unloading said catalyst. Preferably, the number of said ports is comprised between 2 and 8 or more preferably between 2 and 4.

According to an alternative embodiment, said port for loading or unloading the catalyst is an opening that extends continuously over a portion or the full length of the reaction space.

The gas-permeable scallops may rest on the reaction vessel by means of a sliding device such as sliders or hanging at the extremities. The sliders can be advantageously used to extract and to insert back the scallops from the reaction vessels without the need for fine alignments.

According to a particularly preferred embodiment of the invention, the reactor is an adiabatic reactor that includes a heat exchanger arranged inside a central conduit of the reactor. The central conduit can be arranged concentrically to said gas permeable scallops and is preferably centred along a longitudinal axis of the reactor.

The scallops can be part of a basket which contains the catalytic bed. The scallops may be made of any suitable material including but not limited to metals, ceramics, polymers, composites and the likes. Preferably, the scallops are made of metal alloy e.g. Nickel-based alloy or stainless steel.

### Description of the figures

Fig. 1 illustrates a horizontal radial flow reactor according to an embodiment of the invention.
Fig. 2 illustrates a horizontal radial flow reactor according to an alternative embodiment invention.
Fig. 3 is a simplified cross-sectional view according to a plane denoted by line A-A of Fig. 1.
Fig. 4 shows a portion of the cross section according to plane A-A of Fig. 1 in a greater detail.
Figs. 5a to 5c illustrate various embodiments of realization of the scallops forming the array.
Figs. 6a and 6b illustrate various embodiments of realization of the removable scallop(s).
Fig. 7 illustrates a three-dimensional view of a scallop forming the array according to a preferred embodiment of realisation.
Fig. 8 illustrates a three-dimensional view of an end scallop according to a preferred embodiment of realisation.

### Detailed description of the preferred embodiments

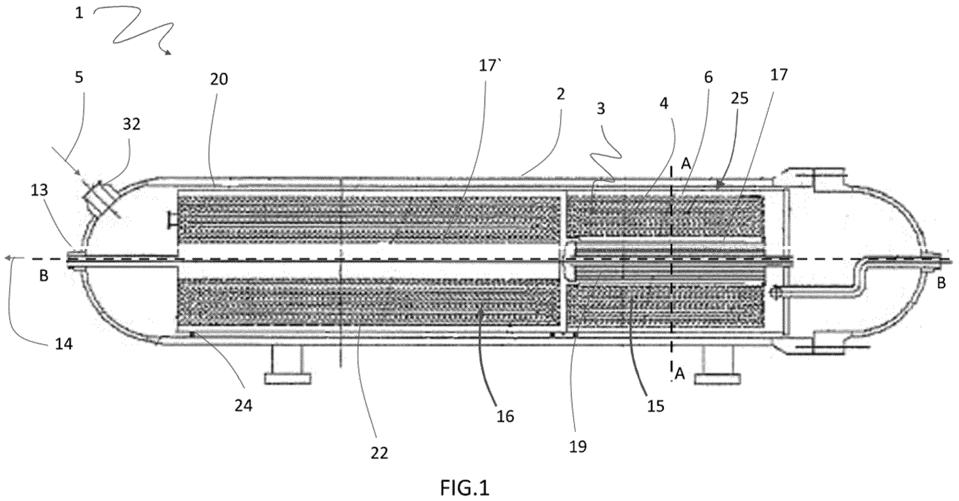

Fig. 1 shows a catalytic reactor 1 with horizontal axis B-B, comprising a reaction vessel 2, an inlet 32 for a reagent gas mixture 5 and an outlet 13 for a product gas 14.

The reactor 1 accommodates two catalytic beds 15 and 16 traversed in sequence by the process gas. The gas mixture 5 is partially reacted in the first bed 15 and the effluent of said bed 15 is fed to the second bed 16 for completion of the conversion. Each of the beds 15 and 16 has an annular configuration and radial symmetry. The beds 15 and 16 define reaction spaces of the reactor 1.

The first catalytic bed 15 is contained in a basket 25 and is surrounded externally by a set of gas permeable scallops 6. The basket 25 however is not necessary.

Said scallops 6 are distributed circumferentially around the bed 15. For example, in the shown embodiment the scallops 6 distribute the inlet gas 5 in the bed 15, which is traversed by a radial inward flow. The inlet gas 5 after crossing the annulus 20 is fed to a heat exchanger 19 to be pre-heated before entering the first bed 15 via the scallops 6.

The heat exchanger 19 is a gas-gas tube heat exchanger which removes heat from the effluent 15 of the catalytic bed and preheats the fresh inlet gas 5.

The effluent of the catalytic bed 15 is collected in a conduit 17 where the inter-bed tube heat exchanger 19 is provided. After a passage in the heat exchanger 19, the hot effluent before is fed to the subsequent bed 16.

The effluent gas of the first catalytic bed 15, after cooling in the heat exchanger 19, is supplied to the second catalytic bed 16 via a set of scallops 22 distributed circumferentially around the bed 16. The product gas effluent from the second bed 16 is collected in a second inner conduit 17' in communication with the outlet 13.

The first and the second catalytic beds 15, 16 are enclosed by the scallops 6, 22. The scallops 6, 22 are confined inside the basket 25 which is provided with an outer wall that rest on the vessel 2. The outer wall of the basket 25 rests on the vessel 2 by means of sliders 24 that allow the extraction of the basket 25 from reactor 1.

In an alternative configuration, the scallops may rest directly on the vessel 2 without the need for the outer wall of the basket 25. In other configurations, the cartridge and the vessel 2 can be a single item and an external anulus 20 is not foreseen.

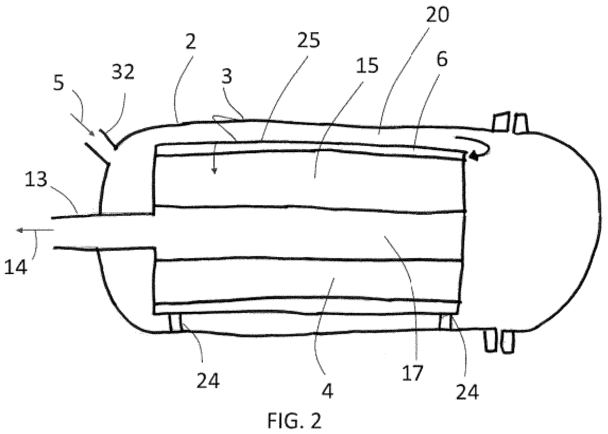

Fig. 2 illustrates a horizontal reactor 1 which is provided with a single catalytic bed.

The horizontal reactor still comprises a reaction vessel 2, an outer cylindrical basket 25 and an inner conduit 17 that is arranged concentrically to said outer basket 25. A reaction space 3 is delimited by the basket 25 and the inner conduit 17. Said reaction space 3 is filled with a catalyst 4.

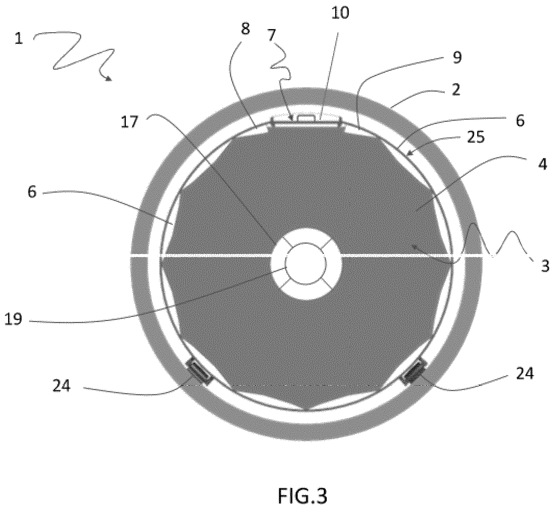

Fig. 3 further illustrates the gas-permeable scallops 6 which are circumferentially arranged around the reaction space 3 to introduce the fresh reagent gas 5 into the catalytic bed 15.

The outer basket 25 is made of or comprises gas permeable scallops 6 having a substantially arc-shaped or D-shaped cross-section and an elongated profile. According to various embodiments, the cross-section of scallops may be substantially D-shaped or almond shaped or generally a curvilinear cross section.

The gas permeable scallops are distributed circumferentially around a portion of the outer boundary of the reaction space 3. In figure, it can be seen that a second portion of the outer boundary of the reaction space is occupied by two end scallops 8, 9 having a modified profile. Said two end scallops 8, 9 delimit a gap 7 in the circumferential array of scallops.

Still in Fig. 3, it can be seen that the reactor 1 comprises a port 10 which is located in correspondence of said gap 7 and is located above the reaction space 3. Said port 10 is adapted to load or unload the catalyst 4 into or from the reaction space 3. For example, the port 10 is a manhole or a plurality of manholes.

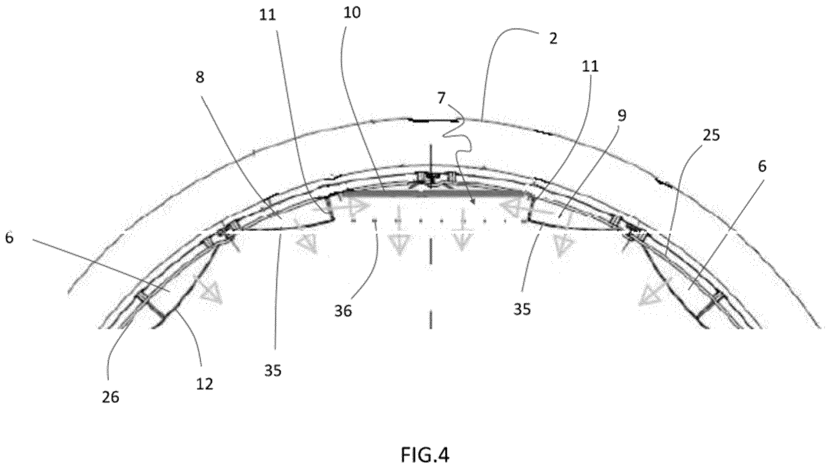

Fig. 4 shows an enlarged view of the cross-section displayed in Fig. 3.

The D-shaped scallops 6 have a profile comprising a flattened side 26 and a curved side 12, wherein said flattened side 26 faces the basket 25 of said horizontal reaction vessel 2 whilst said curved side 12 faces said reaction space 3. In an alternative embodiment, the scallops 6 do not include a flatted side 26 but they only comprise a curved wall/curved side 12 that is leaned against an internal wall of the basket 25 or the cartridge. The external wall of the basket or the cartridge may be provided with an insulting layer.

The modified end scallops 8, 9 comprise a gas permeable surface 11 arranged to distribute the gaseous flow into said gap 7 and a curved front surface 35 configured to distribute the gaseous flow into said reaction space 3 with a radial or a substantially radial direction.

The region of the gap 7 may be regarded as a missing scallop. Said gap 7, which is in communication with the port 10, allows easy access to the reaction space 3 for loading or removing the catalyst. Once the basket 25 has been extracted from the vessel, the catalyst 4 may be removed by connecting a suction equipment to the port 10. A fresh catalyst may be poured into the reaction space 3 directly from the same port 10, all the above without the need to raise the basket 25 in a vertical position. Furthermore, the catalyst can be extracted by keeping the basket in a horizontal position.

The dotted line 36 of Fig. 4 denotes the level of a catalyst contained in the reaction space 3 after settlement and shrinkage. It can be seen that the gap 7 forms a virtual scallop above the catalyst. The arrows in fig. 4 illustrates the flow of fresh gas. Particularly, the truncated end scallops 8, 9 feed gas directly into the reaction space via the front wall 35, and into the gap 7 via the lateral walls 11.

During operation, as can be seen from Fig. 4, the gap 7 does not affect the operation and the radial flow of the catalytic bed. The gap 7 is filled with fresh gas and contributes to feeding the reaction space and catalytic bed. Accordingly, a proper axial-symmetrical flow distribution is created.

In another embodiment the scallops 6 may act as collectors of an outward-flow bed.

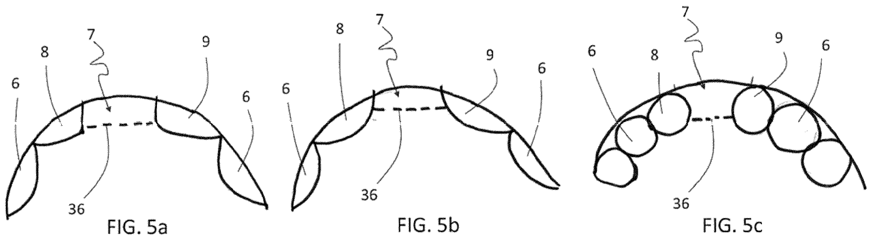

Figs. 5a to 5c illustrate the embodiments wherein the scallops are distributed over an angle of less than 360 degrees so that a gap 7 is formed in the circumferential array of the scallops. Said gap is located above the reaction space and is delimited between two end scallops 8, 9.

Fig. 5a shows that the two end scallops 8,9 have a truncated shape according to a plane of truncation. Fig. 5b shows that the scallops 6 and the two end scallops enclosing the gap 7 are substantially D-shaped. Fig. 5c shows that the scallops 6 and the two end scallops enclosing the gap 7 have a circular profile.

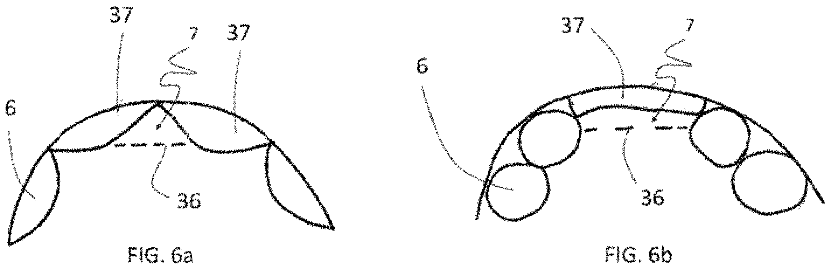

Fig. 6a and Fig. 6b illustrate an embodiment wherein the gap 7 is obtained upon removal of one or more removable scallops 37. According to this embodiment, the gap 7 is formed temporarily for loading/unloading the catalyst. Hence the reactor operates with the full set of scallops 6 around the catalytic bed and the removable scallop(s) 37 is/are removed only for maintenance.

The removable scallops 37 can have the same geometry as the other scallops 6 forming the array or they can have a modified shape. These removable scallops 37 could be connected to the scallops 6 preferably by means of a bolted flange along the longitudinal edges. Alternatively, a welding operation can also be foreseen. The removal scallop(s) 37 can have the same geometrical profile as the scallop 6 forming the array alternatively, the removal scallop 37 can have a modified shape compared to the scallops 6 as shown in Fig. 6b.

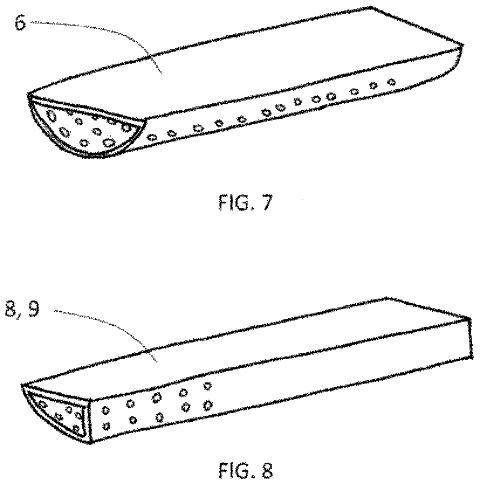

Fig. 7 illustrates a three-dimensional view of a substantially D-shaped scallop 6 forming the array. As shown in Fig. 7 the scallops are provided with a flattened side and a curved side and the latter is provided with gas permeable apertures along the longitudinal extension of the scallop. The aperture can have different forms and shapes but preferably the apertures are circular.

Fig. 8 illustrates a three-dimensional view of an end scallop 8, 9. The end scallop 8, 9 can be seen as the scallop 6 of Fig. 7 that has been cross-sectioned along a vertical plane of truncation.

## Claims

1. A horizontal radial-flow reactor (1) for a gas-phase reaction wherein:
the reactor comprises a horizontal reaction vessel (2) and includes an annular cylindrical reaction space (3) adapted to contain a catalyst (4);
the reactor (1) comprises gas-permeable scallops (6) which surround said reaction space (3) and are adapted to distribute or collect a gaseous flow into or from said reaction space (3), each scallop having a gas-permeable surface facing the inside of the reaction space (3);
wherein said scallops (6) are distributed circumferentially around an outer boundary of the reaction space (3), thus forming a circumferential array of scallops;
wherein said scallops (6), when seen in a cross section, are distributed over an angle of less than 360 degrees, so that the circumferential array of scallops has a gap (7), said gap being delimited between two end scallops (8, 9) of the array and said gap being located at the top of the array,
the reactor (1) further comprising at least one port (10) which is in communication with said gap in the array of scallops (6) and is adapted to load or unload a catalyst into or from said reaction space (3).

2. A horizontal radial-flow reactor (1) for a gas-phase reaction wherein:
the reactor comprises a horizontal reaction vessel (2) and includes an annular cylindrical reaction space (3) adapted to contain a catalyst (4),
the reactor (1) comprises gas-permeable scallops (6) which surround said reaction space (3) and are adapted to distribute or collect a gaseous flow into or from said reaction space (3), each scallop having a gas-permeable surface facing the inside of the reaction space (3);
wherein said scallops (6) are distributed circumferentially around an outer boundary of the reaction space (3), thus forming a circumferential array of scallops,
the reactor (1) further comprising at least one port for loading or unloading a catalyst into or from said reaction space;
wherein said scallops (6) include at least one removable scallop (37) located at the top of the array, wherein removal of said removable scallop forms a space in the array of scallops in communication with said port, to allow loading or unloading of the catalyst into or from said reaction space (3).

3. A reactor according to claim 1, wherein said end scallops (8, 9) are modified scallops with a modified shape compared to other gas-permeable scallops (6) of the array.

4. A reactor according to claim 3, wherein each of said end scallops (8,9) include at least one gas-permeable surface (11) arranged to distribute or collect a gaseous flow into or from said gap (7).

5. A reactor according to claim 4, wherein the scallops (6) have a gas-permeable curved front surface (12) facing the reaction space (3), the end scallops (8,9) have a truncated shape according to a plane of truncation, said plane of truncation being preferably a radial plane which contains the horizontal axis (B-B) of the reactor (1) or a vertical plane.

6. A reactor (1) according to claims 4 and 5, wherein the gas-permeable surface (11) of the end scallops (8,9), which is arranged to distribute or collect a gaseous flow, belongs to said plane of truncation.

7. A reactor according to any of claims 3 to 6, wherein the scallops (6), seen in a cross section, are distributed over an angle of 300 to 330 degrees.

8. A reactor according to any of claims 3 to 7, wherein said gap (7) has substantially the size of one of the scallops.

9. A reactor according to any of the previous claims including a gas feeding means or gas collection means in communication with said gap in the array of scallops, or in communication with said space formed by removal of said removable scallop.

10. A reactor according to claim 9 wherein said gas feeding means are arranged to feed the gas axially or radially into said gap or into said space formed by removal of said removable scallop.

11. A reactor according to any of the previous claims, wherein said gas permeable scallops (6) are part of a gas distributor or gas collector arranged around the reaction space (3).

12. A reactor according to any of the previous claims, wherein said port (10) for loading and unloading the catalyst includes a plurality of openings distributed axially over the length of the reaction space (3).

13. A reactor according to any of claims 1 to 13, wherein said port (10) for loading or unloading said catalyst (4) extends continuously over a portion or the full axial length of said reaction space (3).

14. A method for loading a catalyst in a horizontal radial-flow reactor according to any of the previous claims, wherein:
the catalyst is poured in the reaction space (3) while the reactor is horizontal;
the reaction space (3) is filled with catalyst so that a free space on top of the array of scallops, which is either the gap according to claim 1 or an empty space after removal of one or more removable scallop(s) (37) according to claim 2, is initially filled with catalyst;
wherein the catalyst, after shrinkage, reaches a level below said free space,
so that said free space does not contain catalyst after the catalyst shrinkage, so that said free space can be used for the distribution or collection of gas into/from the reaction space.

15. A method according to claim 14 wherein said free space is arranged to obtain that the gas in the reaction space has a substantially radial direction.

16. A method for operating a horizontal radial-flow reactor according to any of claims 1 to 13 wherein:
the reactor is loaded with catalyst while the reactor is horizontal;
the reaction space (3) of the reactor is filled with catalyst so that a free space on top of the array of scallops, which is either the gap according to claim 1 or an empty space after removal of one or more removable scallop(s) (37) according to claim 2, is initially filled with catalyst;
the catalyst, after shrinkage, reaches a level below said free space, so that said free space does not contain catalyst after the catalyst shrinkage,
said free space left by the catalyst shrinkage, during operation, is used for the distribution or collection of gas into/from the reaction space wherein said gas in the reaction space (3) has a substantially radial direction.

## Patentansprüche

1. Horizontaler Radialflussreaktor (1) für eine Gasphasenreaktion, wobei:
der Reaktor einen horizontalen Reaktionsbehälter (2) umfasst und einen ringförmigen zylindrischen Reaktionsraum (3) enthält, der zur Aufnahme eines Katalysators (4) ausgelegt ist;
der Reaktor (1) gasdurchlässige Verteilkanäle (6) umfasst, die den Reaktionsraum (3) umgeben und dazu ausgelegt sind, einen Gasfluss in den Reaktionsraum (3) hinein oder aus diesem heraus zu verteilen oder
zu sammeln, wobei jede Verteilkanal eine gasdurchlässige Oberfläche aufweist, die zum Inneren des Reaktionsraums (3) hin ausgerichtet ist;
wobei die Verteilkanäle (6) umfänglich um eine Außengrenze des Reaktionsraums (3) verteilt sind und so eine umfängliche Anordnung von Verteilkanälen bilden;
wobei die Verteilkanäle (6), im Querschnitt betrachtet, über einen Winkel von weniger als 360 Grad verteilt sind, so dass die umlaufende Anordnung von Verteilkanälen einen Spalt (7) aufweist, wobei der Spalt zwischen zwei End-Verteilkanäle (8, 9) der Anordnung begrenzt wird und
der Spalt an der Spitze der Anordnung angeordnet ist,
wobei der Reaktor (1) ferner mindestens einen Anschluss (10) umfasst, der mit dem Spalt in der Anordnung von Verteilkanälen (6) in Verbindung steht und dazu ausgelegt ist, einen Katalysator in den Reaktionsraum (3) zu laden oder aus diesem zu entladen.

2. Horizontaler Radialflussreaktor (1) für eine Gasphasenreaktion, wobei:
der Reaktor einen horizontalen Reaktionsbehälter (2) umfasst und einen ringförmigen zylindrischen Reaktionsraum (3) enthält, der zur Aufnahme eines Katalysators (4) ausgelegt ist,
der Reaktor (1) gasdurchlässige Verteilkanäle (6) umfasst, die den Reaktionsraum (3) umgeben und dazu ausgelegt sind, einen Gasfluss in den Reaktionsraum (3) hinein oder aus diesem heraus zu verteilen oder
zu sammeln, wobei jeder Verteilkanal eine gasdurchlässige Oberfläche aufweist, die zum Inneren des Reaktionsraums (3) hin ausgerichtet ist; wobei die Verteilkanäle (6) umfänglich um eine Außengrenze des Reaktionsraums (3) verteilt sind und so eine umfängliche Anordnung von Verteilkanäle bilden,
wobei der Reaktor (1) ferner mindestens einen Anschluss zum Laden oder Entladen eines Katalysators in den bzw. aus dem Reaktionsraum umfasst;
wobei die Verteilkanäle (6) mindestens einen entfernbaren Verteilkanal (37) umfassen, die sich an der Oberseite der Anordnung befindet, wobei das Entfernen des entfernbaren Verteilkanals einen Raum in der Anordnung von Verteilkanälen bildet, der mit dem Anschluss in Verbindung steht, um das Laden oder Entladen des Katalysators in den bzw. aus dem Reaktionsraum (3) zu ermöglichen.

3. Reaktor nach Anspruch 1, wobei die End-Verteilkanäle (8, 9) modifizierte Verteilkanäle mit einer modifizierten Form im Vergleich zu anderen gasdurchlässigen Verteilkanälen (6) der Anordnung sind.

4. Reaktor nach Anspruch 3, wobei jede der End-Verteilkanäle (8, 9) mindestens eine gasdurchlässige Oberfläche (11) aufweist, die so angeordnet ist, dass sie einen Gasfluss in den Spalt (7) hinein oder aus diesem heraus verteilt oder sammelt.

5. Reaktor nach Anspruch 4, wobei die Verteilkanäle (6) eine gasdurchlässige, gekrümmte Vorderseite (12) aufweisen, die dem Reaktionsraum (3) zugewandt ist, wobei die End-Verteilkanäle (8, 9) eine gekürzte Form entsprechend einer Kürzungsebene aufweisen, wobei die Kürzungsebene vorzugsweise eine Radialebene ist, die die horizontale Achse (B-B) des Reaktors (1) enthält, oder eine vertikale Ebene ist.

6. Reaktor (1) nach den Ansprüchen 4 und 5, wobei die gasdurchlässige Oberfläche (11) der End-Verteilkanäle (8, 9), die zum Verteilen oder Sammeln eines Gasflusses angeordnet ist, zu der genannten Kürzungsebene gehört.

7. Reaktor nach einem der Ansprüche 3 bis 6, wobei die Verteilkanäle (6), im Querschnitt gesehen, über einen Winkel von 300 bis 330 Grad verteilt sind.

8. Reaktor nach einem der Ansprüche 3 bis 7, wobei der Spalt (7) im Wesentlichen die Größe einer der Verteilkanäle aufweist.

9. Reaktor nach einem der vorstehenden Ansprüche, einschließlich einer Gaszufuhrvorrichtung oder einer Gassammelvorrichtung, die mit dem Spalt in der Anordnung von Verteilkanälen oder mit dem durch Entfernen des entfernbaren Verteilkanals gebildeten Raum in Verbindung steht.

10. Reaktor nach Anspruch 9, wobei die Gaszufuhrvorrichtung so angeordnet ist, dass sie das Gas axial oder radial in den Spalt oder in den durch Entfernen des entfernbaren Verteilkanals gebildeten Raum einleitet.

11. Reaktor nach einem der vorstehenden Ansprüche, wobei die gasdurchlässigen Verteilkanäle (6) Teil eines Gasverteilers oder Gassammlers sind, der um den Reaktionsraum (3) herum angeordnet ist.

12. Reaktor nach einem der vorstehenden Ansprüche, wobei der Anschluss (10) zum Laden und Entladen des Katalysators eine Mehrzahl an Öffnungen umfasst, die axial über die Länge des Reaktionsraums (3) verteilt sind.

13. Reaktor nach einem der Ansprüche 1 bis 13, wobei sich der Anschluss (10) zum Laden oder Entladen des Katalysators (4) kontinuierlich über einen Teil oder die gesamte axiale Länge des Reaktionsraums (3) erstreckt.

14. Verfahren zum Laden eines Katalysators in einen horizontalen Radialflussreaktor nach einem der vorstehenden Ansprüche, wobei:
der Katalysator in den Reaktionsraum (3) eingefüllt wird, während der Reaktor horizontal ist;
der Reaktionsraum (3) mit Katalysator gefüllt wird, so dass ein freier Raum über der Anordnung von Verteilkanälen, der entweder der Spalt nach Anspruch 1 oder ein leerer Raum nach Entfernung eines entfernbaren Verteilkanals oder mehrerer entfernbarer Verteilkanäle (37) nach Anspruch 2 ist, zunächst mit Katalysator gefüllt wird;
wobei der Katalysator nach Schrumpfung einen Pegel unterhalb des freien Raums erreicht, so dass der freie Raum nach Schrumpfung des Katalysators keinen Katalysator enthält, so dass der freie Raum für die Verteilung oder Sammlung von Gas in den/aus dem Reaktionsraum verwendet werden kann.

15. Verfahren nach Anspruch 14, wobei der freie Raum so angeordnet ist, dass das Gas im Reaktionsraum eine im Wesentlichen radiale Richtung aufweist.

16. Verfahren zum Betreiben eines horizontalen Radialflussreaktors nach einem der Ansprüche 1 bis 13, wobei:
der Reaktor mit Katalysator beladen wird, während der Reaktor horizontal ist;
der Reaktionsraum (3) des Reaktors mit Katalysator gefüllt wird, so dass ein freier Raum über der Anordnung von Verteilkanälen, der entweder der Spalt nach Anspruch 1 oder ein leerer Raum nach Entfernung eines entfernbaren Verteilkanals oder mehrerer entfernbarer Verteilkanäle (37) nach Anspruch 2 ist, zunächst mit Katalysator gefüllt wird;
der Katalysator nach Schrumpfung einen Pegel unterhalb des freien Raums erreicht, so dass der freie Raum nach Schrumpfung des Katalysators keinen Katalysator enthält,
der durch das Schrumpfen des Katalysators während des Betriebs entstandene freie Raum für die Verteilung oder Sammlung von Gas in den/aus dem Reaktionsraum verwendet wird, wobei das Gas im Reaktionsraum (3) eine im Wesentlichen radiale Richtung aufweist.

## Revendications

1. Réacteur à flux radial horizontal (1) pour une réaction en phase gazeuse dans lequel :
le réacteur comporte un récipient à réaction horizontal (2) et inclut un espace de réaction cylindrique annulaire (3) adapté pour contenir un catalyseur (4) ;
le réacteur (1) comporte des dentelures perméables aux gaz (6) qui entourent ledit espace de réaction (3) et sont adaptées pour distribuer ou collecter un flux gazeux dans ou depuis ledit espace de réaction (3), chaque dentelure présentant une surface perméable aux gaz orientée vers l'intérieur de l'espace de réaction (3) ;
dans lequel lesdites dentelures (6) sont réparties circonférentiellement autour d'une limite externe de l'espace de réaction (3), formant ainsi un réseau circonférentiel de dentelures ;
dans lequel lesdites dentelures (6), lorsqu'elles sont vues en coupe, sont réparties sur un angle inférieur à 360 degrés, de sorte que le réseau circonférentiel de dentelures présente un jeu (7), ledit jeu étant délimité entre deux dentelures d'extrémité (8, 9) du réseau et ledit jeu étant situé au sommet du réseau,
le réacteur (1) comportant en outre au moins un orifice (10) qui est en communication avec ledit jeu dans le réseau de dentelures (6) et est adapté pour charger ou décharger un catalyseur dans ou depuis ledit espace de réaction (3).

2. Réacteur à flux radial horizontal (1) pour une réaction en phase gazeuse dans lequel :
le réacteur comporte un récipient à réaction horizontal (2) et inclut un espace de réaction cylindrique annulaire (3) adapté pour contenir un catalyseur (4),
le réacteur (1) comporte des dentelures perméables aux gaz (6) qui entourent ledit espace de réaction (3) et sont adaptées pour distribuer ou collecter un flux gazeux dans ou depuis ledit espace de réaction (3), chaque dentelure présentant une surface perméable aux gaz orientée vers l'intérieur de l'espace de réaction (3) ;
dans lequel lesdites dentelures (6) sont réparties circonférentiellement autour d'une limite externe de l'espace de réaction (3), formant ainsi un réseau circonférentiel de dentelures,
le réacteur (1) comportant en outre au moins un orifice de chargement ou de déchargement d'un catalyseur dans ou depuis ledit espace de réaction ;
dans lequel lesdites dentelures (6) incluent au moins une dentelure amovible (37) située au sommet du réseau, dans lequel l'enlèvement de ladite dentelure amovible forme un espace dans le réseau de dentelures en communication avec ledit orifice, pour permettre le chargement ou le déchargement du catalyseur dans ou depuis ledit espace de réaction (3).

3. Réacteur selon la revendication 1, dans lequel lesdites dentelures (8, 9) sont des dentelures modifiées avec une forme modifiée par rapport à d'autres dentelures perméables aux gaz (6) du réseau.

4. Réacteur selon la revendication 3, dans lequel chacune desdites dentelures d'extrémité (8, 9) inclut au moins une surface perméable aux gaz (11) agencée pour distribuer ou collecter un flux gazeux dans ou depuis ledit jeu (7).

5. Réacteur selon la revendication 4, dans lequel les dentelures (6) présentent une surface avant incurvée perméable aux gaz (12) orientée vers l'espace de réaction (3), les dentelures d'extrémité (8, 9) présentent une forme tronquée selon un plan de troncature, ledit plan de troncature étant de préférence un plan radial qui contient l'axe horizontal (B-B) du réacteur (1) ou un plan vertical.

6. Réacteur (1) selon les revendications 4 et 5, dans lequel la surface perméable aux gaz (11) des dentelures d'extrémité (8, 9), qui est agencée pour distribuer ou collecter un flux gazeux, appartient audit plan de troncature.

7. Réacteur selon l'une quelconque des revendications 3 à 6, dans lequel les dentelures (6), vues en coupe, sont réparties sur un angle de 300 à 330 degrés.

8. Réacteur selon l'une quelconque des revendications 3 à 7, dans lequel ledit jeu (7) a sensiblement la taille d'une des dentelures.

9. Réacteur selon l'une quelconque des revendications précédentes incluant des moyens d'alimentation en gaz ou des moyens de collecte de gaz en communication avec ledit jeu dans le réseau de dentelures, ou en communication avec ledit espace formé par enlèvement de ladite dentelure amovible.

10. Réacteur selon la revendication 9 dans lequel lesdits moyens d'alimentation en gaz sont agencés pour alimenter axialement ou radialement en gaz ledit jeu ou ledit espace formé par enlèvement de ladite dentelure amovible.

11. Réacteur selon l'une quelconque des revendications précédentes, dans lequel lesdites dentelures perméables aux gaz (6) font partie d'un distributeur de gaz ou collecteur de gaz agencé autour de l'espace de réaction (3).

12. Réacteur selon l'une quelconque des revendications précédentes, dans lequel ledit orifice (10) de chargement et de déchargement du catalyseur inclut une pluralité d'ouvertures réparties axialement sur la longueur de l'espace de réaction (3).

13. Réacteur selon l'une quelconque des revendications 1 à 13, dans lequel ledit orifice (10) de chargement ou de déchargement dudit catalyseur (4) s'étend en continu sur une partie ou la longueur axiale totale dudit espace de réaction (3).

14. Procédé de chargement d'un catalyseur dans un réacteur à flux radial horizontal selon l'une quelconque des revendications précédentes, dans lequel :
le catalyseur est versé dans l'espace de réaction (3) alors que le réacteur est à l'horizontale ;
l'espace de réaction (3) est rempli de catalyseur de sorte qu'un espace libre au sommet du réseau de dentelures, qui est soit le jeu selon la revendication 1, soit un espace vide après enlèvement d'une ou plusieurs dentelures amovibles (37) selon la revendication 2, soit initialement rempli de catalyseur ;
dans lequel le catalyseur, après retrait, atteint un niveau inférieur audit espace libre, de sorte que ledit espace libre ne contienne pas de catalyseur après retrait du catalyseur, de sorte que ledit espace libre puisse être utilisé pour la distribution ou la collecte de gaz dans/depuis l'espace de réaction.

15. Procédé selon la revendication 14 dans lequel ledit espace libre est agencé pour faire en sorte que le gaz dans l'espace de réaction ait une direction sensiblement radiale.

16. Procédé de fonctionnement d'un réacteur à flux radial horizontal selon l'une quelconque des revendications 1 à 13 dans lequel :
le réacteur est chargé de catalyseur alors que le réacteur est à l'horizontale ;
l'espace de réaction (3) du réacteur est rempli de catalyseur de sorte qu'un espace libre au sommet du réseau de dentelures, qui est soit le jeu selon la revendication 1, soit un espace vide après enlèvement d'une ou plusieurs dentelures amovibles (37) selon la revendication 2, soit initialement rempli de catalyseur ;
le catalyseur, après retrait, atteint un niveau inférieur audit espace libre, de sorte que ledit espace libre ne contienne pas de catalyseur après retrait du catalyseur,
ledit espace libre laissé par le retrait du catalyseur, pendant le fonctionnement, est utilisé pour la distribution ou la collecte de gaz dans/depuis l'espace de réaction dans lequel ledit gaz dans l'espace de réaction (3) a une direction sensiblement radiale.
